# FASCICULE DE BREVET EUROPEEN

(11) **EP 0 873 894 B1**
(45) Date de publication et mention de la délivrance du brevet: **06.02.2002**
(21) Numéro de dépôt: 98400629.6
(22) Date de dépôt: 17.03.1998
(51) Int. Cl.: B60G 21/10

(54) **Dispositif de suspension hydropneumatique d'une paire de roues d'un train de roues de véhicule automobile**
Hydropneumatische Federung für einen Radsatz eines Fahrwerks für ein Kraftfahrzeug
Hydropneumatic suspension for a set of wheels of a running gear for a motor vehicle

(30) Priorité: 24.03.1997 FR 9703559
(43) Date de publication de la demande: 28.10.1998
(73) Titulaire: AUTOMOBILES PEUGEOT, 75116 Paris (FR); AUTOMOBILES CITROEN, 92200 Neuilly-sur-Seine (FR)
(72) Inventeur: Combes, Michel, 95370 Montigny Les Cormeilles (FR)
(74) Mandataire: Moncheny, Michel

(56) Documents cités:
- EP-A- 0 663 308
- EP-A- 0 730 988

## Description

La présente invention concerne un dispositif de suspension hydropneumatique d'une paire de roues d'un train de roues de véhicule automobile.

On connaît déjà dans l'état de la technique un dispositif de suspension hydropneumatique d'une paire de roues d'un train de roues de véhicule automobile, du type comprenant une paire de vérins reliés chacun à une roue correspondante et comportant chacun un corps dans lequel coulisse un piston, et des moyens anti-dévers comprenant, pour chaque vérin, deux chambres hydrauliques anti-dévers opposées, respectivement haute et basse, séparées par le piston, des moyens de raccordement hydraulique des chambres anti-dévers entre elles, et des moyens de commutation des moyens de raccordement entre une première configuration, dite décroisée, dans laquelle les moyens de raccordement définissent deux circuits hydrauliques décroisés raccordant chacun les deux chambres anti-dévers d'un même vérin, et une seconde configuration, dite croisée, dans laquelle les moyens de raccordement définissent deux circuits hydrauliques croisés raccordant chacun une chambre anti-dévers d'un vérin avec la chambre anti-dévers opposée de l'autre vérin.

Un dispositif de suspension de ce type est décrit par exemple dans DE-A-3 427 508.

La configuration décroisée est adaptée au déplacement du véhicule en ligne droite. Cette configuration favorise notamment l'amortissement des déplacements verticaux du véhicule et la maîtrise des effets de tangage.

La configuration croisée est adaptée au déplacement du véhicule dans un virage et permet de pallier les effets de dévers.

Le passage de la configuration croisée à la configuration décroisée permet donc d'améliorer le confort de la suspension du véhicule lorsque la tenue du véhicule au dévers n'est plus nécessaire, ce qui est le cas lorsque le véhicule se déplace en ligne droite.

Les moyens de commutation des moyens de raccordements décrits dans DE-A-3 427 508 comprennent une vanne unique. Cette vanne forme un organe commun aux deux circuits décroisés reliant mécaniquement ces derniers. La vanne de commutation unique est placée généralement au milieu du train de roues, entre les vérins, si bien que cette vanne de commutation est relativement éloignée de chaque vérin. Un tel agencement a pour inconvénients notamment des pertes de charge relativement importantes dans les circuits décroisés et des effets d'inertie indésirables notamment en configuration décroisée.

L'invention a notamment pour but de réduire les effets d'inertie et les pertes de charge des moyens anti-dévers équipant un dispositif de suspension hydropneumatique, afin d'améliorer le confort du véhicule en ligne droite.

A cet effet, l'invention a pour objet un dispositif de suspension hydropneumatique d'une paire de roues d'un train de roues de véhicule automobile, du type précité, caractérisé en ce que les moyens de commutation comprennent deux vannes de commutation, chacune associée à un vérin, commandées simultanément par des moyens communs pour le changement de configuration des moyens de raccordement, ces deux vannes de commutation définissant, lorsque les moyens de raccordement sont dans leur configuration décroisée, des circuits décroisés séparés mécaniquement l'un de l'autre et plus courts que les circuits croisés.

Suivant d'autres caractéristiques de l'invention:
- la vanne de commutation et le circuit décroisé associés à un vérin sont agencés dans le corps de ce vérin;
- chaque vérin comprend une chambre hydraulique de suspension raccordée, d'une part, à un accumulateur hydropneumatique de suspension porté par ce vérin, et d'autre part, à un dispositif de correction de hauteur du véhicule commun aux deux vérins;
- les moyens de raccordement comprennent, d'une part, deux conduits de croisement munis chacun d'une première extrémité raccordant le reste du conduit à une chambre anti-dévers d'un premier vérin par l'intermédiaire de la vanne de commutation -associée à ce premier vérin- commutée dans la configuration croisée, et d'une seconde extrémité raccordée en permanence à la chambre anti-dévers opposée du second vérin, de manière à définir les circuits croisés, et d'autre part, deux conduits de dérivation raccordant entre elles les extrémités des deux conduits de croisement raccordées à un même vérin, par l'intermédiaire de la vanne de commutation -associée à ce vérin- commutée dans la configuration décroisée, de manière à définir les circuits décroisés, les extrémités de raccordement aux chambres anti-dévers des deux conduits de croisement étant communes aux circuits croisés et décroisés ;
- le dispositif comprend deux accumulateurs hydropneumatiques anti-dévers raccordés respectivement aux deux conduits de croisement sur des tronçons de ces derniers non communs aux circuits décroisés ;
- les moyens de commande comprennent une électrovanne raccordée hydrauliquement aux deux vannes de commutation ;
- les deux accumulateurs hydropneumatiques anti-dévers et l'électrovanne de commande sont portés par un support commun séparé des vérins ;
- chaque vanne de commutation comprend un distributeur à deux positions -correspondant aux configurations croisée et décroisée- et à trois orifices communiquant respectivement avec une chambre anti-dévers du vérin portant la vanne de commutation et avec les chambres anti-dévers opposées de ce même vérin et de l'autre vérin;
- les deux positions du distributeur de chaque vanne de commutation sont définies par déplacement d'un tiroir du distributeur entre une position de repos, correspondant à la configuration croisée des moyens de raccordement, et une position active, correspondant à la configuration décroisée des moyens de raccordement, une première extrémité du tiroir étant soumise en permanence à la pression hydraulique de rappel d'une des chambres du vérin portant la vanne de commutation, de manière à solliciter le tiroir en position de repos, la seconde extrémité du tiroir étant soumise, lorsque l'électrovanne est activée, à la pression hydraulique de commande de l'électrovanne, de manière à solliciter le tiroir en position active, à l'encontre de la pression hydraulique de rappel.

L'invention sera mieux comprise à la lecture de la description qui va suivre donnée uniquement à titre d'exemple et faite en se référant aux dessins dans lesquels:
- la figure 1 est une vue schématique d'un dispositif de suspension hydropneumatique selon l'invention;
- les figures 2 et 3 sont des vues schématiques analogues à la figure 1, dans lesquelles les moyens de raccordement des chambres anti-dévers sont dans des configurations croisée et décroisée respectivement.

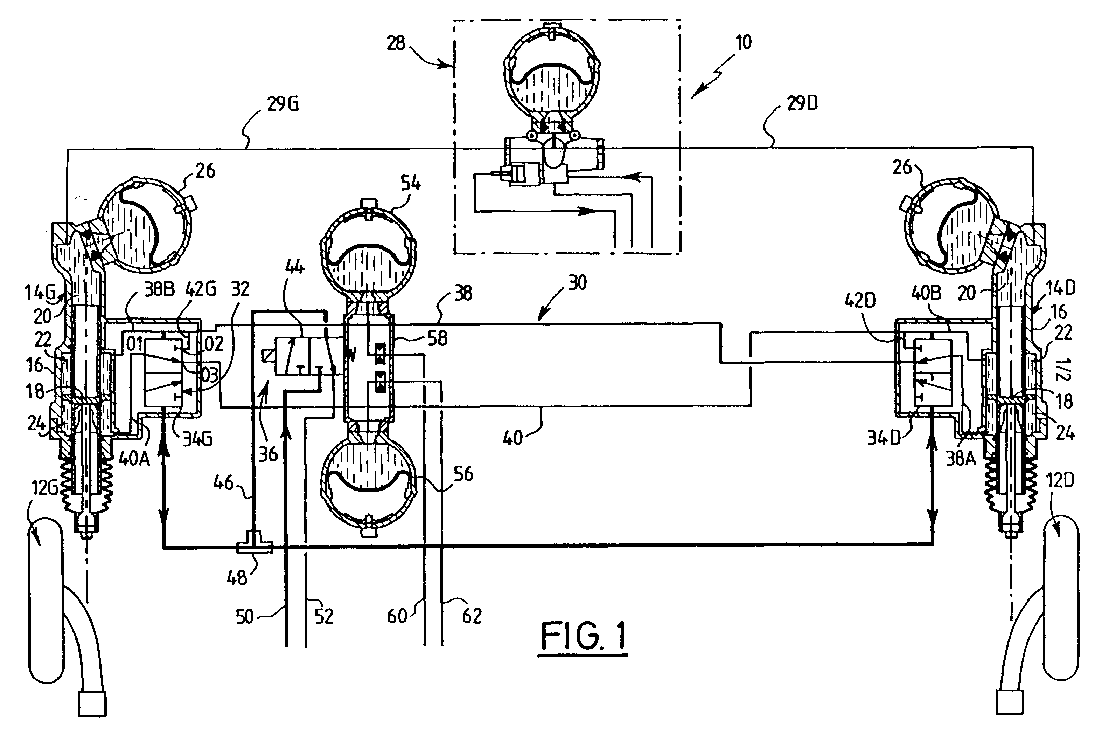

On a représenté sur la figure 1 un dispositif de suspension hydropneumatique 10 d'une paire de roues gauche 12G et droite 12D d'un train de roues de véhicule automobile.

Ce dispositif de suspension 10 comprend une paire de vérins gauche 14G et droit 14D reliés chacun à une roue 12G,12D correspondante.

Chaque vérin 14G,14D comprend un corps 16 dans lequel coulisse un piston 18 délimitant trois chambres hydrauliques superposées 20,22,24 de volume variable.

La première chambre 20 de chaque vérin est une chambre de suspension raccordée, d'une part, à un accumulateur hydropneumatique de suspension 26, porté par le vérin, et d'autre part, à un dispositif de correction de hauteur du véhicule, de type classique (non représenté), commun aux deux vérins, éventuellement via un régulateur hydraulique de flexibilité 28.

Les chambres de suspension 20 et les accumulateurs hydropneumatiques de suspension 26 sont alimentés en liquide haute pression par des conduits 29G,29D raccordés au dispositif de correction de hauteur.

Le dispositif de suspension 10 comprend également des moyens anti-dévers dont font partie les seconde et troisième chambres 22,24 de chaque vérin 14G,14D. Ces chambres 22,24 constituent des chambres anti-dévers opposées, respectivement haute et basse, séparées par le piston 18.

Les moyens anti-dévers comprennent de plus des moyens 30 de raccordement hydraulique des chambres anti-dévers 22,24 entre elles, et des moyens 32 de commutation de ces moyens de raccordement 30 entre deux configurations dites décroisée et croisée.

Les moyens de commutation 32 comprennent deux vannes de commutation 34G,34D, chacune associée à un vérin 14G,14D, commandées simultanément par des moyens communs 36 pour changer la configuration des moyens de raccordement 30.

Ces moyens de raccordement 30 comprennent deux conduits de croisement 38,40 munis, chacun, d'une première extrémité 38A,40A raccordant le reste du conduit 38,40 à une chambre anti-dévers d'un premier vérin (notamment la chambre basse 24) par l'intermédiaire de la vanne de commutation 34G,34D -associée à ce vérin- commutée dans la configuration croisée, et une seconde extrémité 38B,40B raccordée en permanence à la chambre anti-dévers opposée (notamment la chambre haute 22) du second vérin.

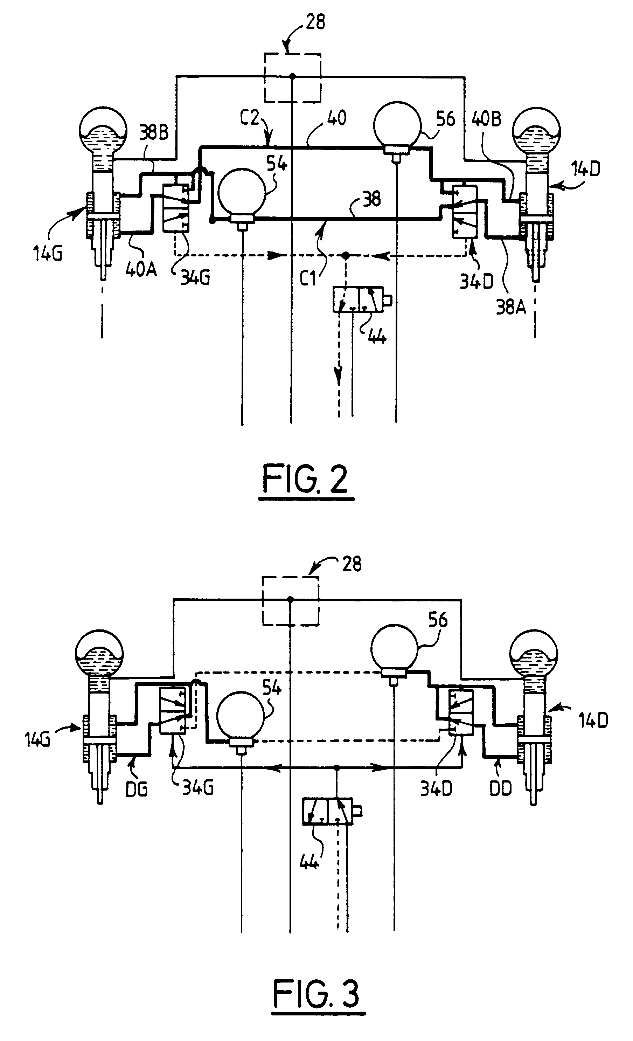

On notera donc que, lorsque les vannes 34G,34D sont commutées dans la configuration croisée, ces vannes 34G,34D et les conduits de croisement 30,40 définissent deux circuits hydrauliques C1,C2, dits croisés, raccordant chacun une chambre anti-dévers 22,24 d'un vérin 14G,14D avec la chambre opposée 24,22 de l'autre vérin 14D,14G, comme cela est représenté sur la figure 2.

Les moyens de raccordement 30 comprennent également deux conduits de dérivation 42G,42D raccordant entre elles les extrémités 38B,40A,38A,40B des deux conduits de croisement 38,40 raccordées à un même vérin 14G,14D, par l'intermédiaire de la vanne de commutation 34G,34D -associée à ce vérin- commutée dans la configuration décroisée.

On notera donc que, lorsque les vannes 34G,34D sont commutées dans la configuration décroisée, ces vannes, les conduits de dérivation 42G,42D et les extrémités 38B,40A,38A,40B des conduits de croisement définissent deux circuits hydrauliques DG,DD, dits décroisés, associés aux deux vérins 14G,14D, raccordant chacun les deux chambres anti-dévers 22,24 d'un même vérin, comme cela est représenté sur la figure 3.

On notera également que les extrémités 38A,38B, 40A,40B des conduits de croisement raccordées aux chambres anti-dévers 22,24 sont communes aux circuits croisés C1,C2 et décroisés DG,DD.

De préférence, la vanne de commutation 34G,34D associée à chaque vérin et les autres éléments 38B,40A, 42G,38A,40B,42D, destinés à définir le circuit décroisé DG,DD associé à chaque vérin sont agencés dans le corps 16 de ce vérin, comme cela est représenté schématiquement sur la figure 1.

A titre d'exemple, chaque vanne de commutation 34G,34D comprend un distributeur à deux positions et trois orifices 01,02,03 symbolisé selon une norme classique sur les figures.

Les deux positions de chaque distributeur correspondent aux deux configurations croisée et décroisée.

Les trois orifices O1 à 03 communiquent respectivement avec une chambre anti-dévers 24 du vérin 14G,14D portant la vanne de commutation 34G,34D et avec les chambres anti-dévers opposées 22 de ce même vérin 14G,14D et de l'autre vérin 14D,14G, par l'intermédiaire des extrémités appropriées des conduits de croisement 38,40 et des conduits de dérivation 42G,42D.

Du fait que les deux vannes de commutation 34G,34D sont séparées et agencées chacune sur le corps 16 du vérin qui leur est associée, les circuits décroisés DG,DD sont séparés mécaniquement l'un de l'autre (ils n'ont pas d'organe commun) et relativement courts si bien que les pertes de charge dans ces circuits décroisés sont très réduites voire négligeables.

Les moyens de commande 36 des deux vannes de commutation 34G,34D comprennent, de préférence, une électrovanne 44, symbolisée selon une norme classique sur les figures, raccordée hydrauliquement aux deux vannes de commutation par un conduit 46 à bifurcation 48.

L'électrovanne 44 est raccordée, par ailleurs, à un conduit 50 d'alimentation en liquide haute pression et à un conduit 52 de retour de liquide vers un réservoir non représenté.

Lorsque l'électrovanne 44 est au repos, le conduit de liquide haute pression 50 est isolé du conduit de raccordement 46. Par contre, lorsque l'électrovanne 44 est activée, le conduit de liquide haute pression 50 (pression de commande) est raccordé au conduit 46.

L'électrovanne 44, pilotée à l'aide de moyens classiques, permet la commutation des positions des distributeurs des vannes 34G,34D.

Les deux positions de chaque vanne de commutation 34G,34D sont définies par déplacement d'un tiroir du distributeur de la vanne entre une position de repos, correspondant à la configuration croisée des moyens de raccordement 30, et une position active correspondant à la configuration décroisée des moyens de raccordement 30.

On notera que, conformément à la symbolique classique utilisée pour représenter les distributeurs des vannes de commutation 34G,34D, les tiroirs de ces distributeurs ne sont pas représentés formellement sur les dessins.

Une première extrémité de chaque tiroir est soumise en permanence à la pression hydraulique de rappel d'une des chambres, notamment la chambre anti-dévers haute 22, du vérin 14G,14H portant le tiroir, de manière à solliciter ce tiroir en position de repos.

La seconde extrémité de chaque tiroir est soumise, lorsque l'électrovanne 44 est activée, à la pression hydraulique de commande de cette électrovanne, de manière à solliciter le tiroir en position active, à l'encontre de la pression hydraulique de rappel.

Le dispositif de suspension 10 comprend également deux accumulateurs hydropneumatiques anti-dévers 54,56 raccordés respectivement aux deux conduits de croisement 38,40 sur des tronçons de ces derniers non communs aux circuits décroisés DG,DD.

De préférence, les deux accumulateurs hydropneumatiques anti-dévers 54,56 et l'électrovanne de commande 44 sont portés par un support commun 58 séparé des vérins 14G,14D.

Les accumulateurs hydropneumatiques anti-dévers 54,56 ainsi que les chambres anti-dévers 22,24 sont raccordés à des circuits hydrauliques classiques 60,62 d'amenée et d'évacuation de liquide par l'intermédiaire de moyens de raccordement connus en soi.

On notera que sur les figures 2 et 3, d'une part, les vannes de commutation 34G,34D ont été représentées séparées des vérins 14G,14D, et d'autre part, l'électrovanne 44 et les accumulateurs hydropneumatiques anti-dévers 54,56 ont été représentés séparés les uns des autres, ceci pour faciliter la compréhension de ces figures.

On précisera ci-dessous les points essentiels de fonctionnement du dispositif de suspension hydropneumatique 10 selon l'invention.

Lorsque le véhicule roule dans un virage, l'électrovanne 44 et les tiroirs des vannes de commutation 34G,34D sont au repos. Les moyens de raccordement 30 sont dans la configuration croisée, comme cela est représenté sur la figure 2. Le raccordement croisé des chambres anti-dévers 22,24 des vérins et les accumulateurs hydropneumatiques anti-dévers 54,56 permettent de contrer le dévers du véhicule.

Lorsque le véhicule roule en ligne droite, l'électrovanne 44 et les tiroirs des vannes de commutation 34G,34D sont activés. Les moyens de raccordement 30 sont alors dans la configuration décroisée, comme cela est représenté sur la figure 3.

Les chambres anti-dévers 22,24 de chaque vérin communiquent directement entre elles par l'intermédiaire des circuits décroisés DG,DD, ce qui permet des débattements verticaux des deux roues indépendants, les chambres de suspension 20 des vérins 14G,14D assurant le maintien vertical du véhicule.

Les chambres anti-dévers 22,24 n'ont pas d'effet sur les vérins 14G,14D, leur pression étant identiques du fait qu'elles sont raccordées directement entre elles.

Les circuits décroisés étant très courts, les pertes de charge et les effets d'inertie dans ces derniers sont négligeables.

On notera par ailleurs que, dans la configuration décroisée des moyens de raccordement, les accumulateurs hydropneumatiques anti-dévers 54,56 sont séparés des circuits décroisés DG,DD, car raccordés à des tronçons des conduits de croisement 38,40 non communs aux circuits décroisés. De ce fait, la raideur des accumulateurs hydropneumatiques anti-dévers 54,56 n'a pas d'influence sur les circuits décroisés DG,DD.

## Revendications

1. Dispositif de suspension hydropneumatique d'une paire de roues (12G,12D) d'un train de roues de véhicule automobile, du type comprenant
une paire de vérins (14G,14D) reliés chacun à une roue (12G,12D) correspondante et comportant chacun un corps (16) dans lequel coulisse un piston (18), et
des moyens anti-dévers comprenant :
- pour chaque vérin (14G,14D), deux chambres hydrauliques anti-dévers opposées (22,24), respectivement haute et basse, séparées par le piston (18),
- des moyens (32) de raccordement hydraulique des chambres anti-dévers (22,24) entre elles, et
- des moyens (36) de commutation des moyens de raccordement (30) entre une première configuration, dite décroisée, dans laquelle les moyens de raccordement (30) définissent deux circuits hydrauliques décroisés (DG,DD) raccordant chacun les deux chambres anti-dévers (22,24) d'un même vérin, et une seconde configuration, dite croisée, dans laquelle les moyens de raccordement (30) définissent deux circuits hydrauliques croisés (C1,C2) raccordant chacun une chambre anti-dévers (22,24) d'un vérin (14G,14D) avec la chambre anti-dévers opposée (24,22) de l'autre vérin (14D,14G),
**caractérisé en ce que** les moyens de commutation (32) comprennent deux vannes de commutation (34G,34D), chacune associée à un vérin (14G,14D), commandées simultanément par des moyens communs (36) pour le changement de configuration des moyens de raccordement (30), ces deux vannes de commutation (34G,34D) définissant, lorsque les moyens de raccordement (30) sont dans leur configuration décroisée, des circuits décroisés (DG,DD) séparés mécaniquement l'un de l'autre et plus courts que les circuits croisés (C1,C2).

2. Dispositif selon la revendication 1, **caractérisé en ce que** la vanne de commutation (34G,34D) et le circuit décroisé (DG,DD) associés à un vérin (14G,14D) sont agencés dans le corps (16) de ce vérin.

3. Dispositif selon la revendication 1 ou 2 , **caractérisé en ce que** chaque vérin (14G,14D) comprend une chambre hydraulique de suspension (20) raccordée, d'une part, à un accumulateur hydropneumatique de suspension (26) porté par ce vérin, et d'autre part, à un dispositif de correction de hauteur du véhicule commun aux deux vérins.

4. Dispositif selon l'une quelconque des revendications 1 à 3, **caractérisé en ce que** les moyens de raccordement (30) comprennent,
d'une part, deux conduits de croisement (38,40) munis chacun d'une première extrémité (38A,40A) raccordant le reste du conduit (38,40) à une chambre anti-dévers (24) d'un premier vérin par l'intermédiaire de la vanne de commutation (34G,34D) -associée à ce premier vérin (14G,14D)- commutée dans la configuration croisée, et d'une seconde extrémité (38B,40B) raccordée en permanence à la chambre anti-dévers opposée (22) du second vérin (14D,14G), de manière à définir les circuits croisés (C1,C2), et
d'autre part, deux conduits de dérivation (42G, 42D) raccordant entre elles les extrémités (38B,40A, 38A,40B) des deux conduits de croisement (38,40) raccordées à un même vérin (14G,14D), par l'intermédiaire de la vanne de commutation (34G,34D) -associée à ce vérin (14G, 14D)- commutée dans la configuration décroisée, de manière à définir les circuits décroisés (DG,DD),
les extrémités de raccordement aux chambres anti-dévers (22,24) des deux conduits de croisement (38,40) étant communes aux circuits croisés (C1,C2) et décroisés (DG,DD).

5. Dispositif selon la revendication 4, **caractérisé en ce qu'**il comprend deux accumulateurs hydropneumatiques anti-dévers (54,56) raccordés respectivement aux deux conduits de croisement (38,40) sur des tronçons de ces derniers non communs aux circuits décroisés (DG,DD).

6. Dispositif selon l'une quelconque des revendications 1 à 5, **caractérisé en ce que** les moyens de commande (36) comprennent une électrovanne (44) raccordée hydrauliquement aux deux vannes de commutation (34G,34D).

7. Dispositif selon les revendications 5 et 6 prises ensemble, **caractérisé en ce que** les deux accumulateurs hydropneumatiques anti-dévers (54,56) et l'électrovanne de commande (44) sont portés par un support commun (58) séparé des vérins (14G,14D).

8. Dispositif selon la revendication 6 ou 7, **caractérisé en ce que** chaque vanne de commutation (34G, 34D) comprend un distributeur à deux positions -correspondant aux configurations croisée et décroisée- et à trois orifices (O1 à O3) communiquant respectivement avec une chambre anti-dévers (22,24) du vérin (14G,14D) portant la vanne de commutation et avec les chambres anti-dévers opposées (24,22) de ce même vérin (14G,14D) et de l'autre vérin (14D,14G).

9. Dispositif selon la revendication 8, **caractérisé en ce que** les deux positions du distributeur de chaque vanne de commutation (34G,34D) sont définies par déplacement d'un tiroir du distributeur entre une position de repos, correspondant à la configuration croisée des moyens de raccordement, et une position active, correspondant à la configuration décroisée des moyens de raccordement, une première extrémité du tiroir étant soumise en permanence à la pression hydraulique de rappel d'une des chambres (20 à 24) du vérin (14G,14D) portant la vanne de commutation, de manière à solliciter le tiroir en position de repos, la seconde extrémité du tiroir étant soumise, lorsque l'électrovanne (44) est activée, à la pression hydraulique de commande de l'électrovanne (44), de manière à solliciter le tiroir en position active, à l'encontre de la pression hydraulique de rappel.

## Patentansprüche

1. Hydropneumatische Federungsvorrichtung für ein Radpaar (12G, 12D) eines Kraftfahrzeug-Achssatzes, umfassend
- ein Paar Zylinder (14G, 14D), die jeweils mit einem entsprechenden Rad (12G, 12D) verbunden sind und jeweils einen Körper (16) besitzen, in dem ein Kolben (18) gleitet, und
- Anti-Querneigungsmittel, umfassend:
- für jeden Zylinder (14G, 14D) zwei einander entgegengesetzte hydraulische Anti-Querneigungskammern (22, 24), eine obere und eine untere, die durch den Kolben (18) getrennt sind,
- Mittel (32) zur gegenseitigen hydraulischen Verbindung der Anti-Querneigungskammern (22, 24) und
- Mittel (36) zum Umschalten der Verbindungsmittel (30) zwischen einer ersten, sogenannten ungekreuzten Konfiguration, in der die Verbindungsmittel (30) zwei ungekreuzte Hydraulikkreise (DG, DD) bilden, die jeweils die beiden Anti-Querneigungskammern (22, 24) ein und desselben Zylinders miteinander verbinden, und einer zweiten, sogenannten gekreuzten Konfiguration, in der die Verbindungsmittel (30) zwei sich kreuzende Hydraulikkreise (C1, C2) bilden, die jeweils eine Anti-Querneigungskammer (22, 24) eines Zylinders (14G, 14D) mit der entgegengesetzten Anti-Querneigungskammer (24, 22) des anderen Zylinders (14D, 14G) verbinden,
**dadurch gekennzeichnet, dass** die Umschaltmittel (32) zwei jeweils einem Zylinder (14G, 14D) zugeordnete Schaltventile (34G, 34D) umfassen, die gleichzeitig durch gemeinsame Mittel (36) für den Konfigurationswechsel der Verbindungsmittel (30) gesteuert werden und die, wenn die Verbindungsmittel (30) in ihrer ungekreuzten Konfiguration sind, ungekreuzte Kreise (DG, DD) bilden, die mechanisch voneinander getrennt sind und kürzer als die gekreuzten Kreise (C1, C2) sind.

2. Vorrichtung nach Anspruch 1, **dadurch gekennzeichnet, dass** das Schaltventil (34G, 34D) und der ungekreuzte Kreis (DG, DD), die einem Zylinder (14G, 14D) zugeordnet sind, in. dem Körper (16) dieses Zylinders vorgesehen sind.

3. Vorrichtung nach Anspruch 1 oder 2, **dadurch gekennzeichnet, dass** jeder Zylinder (14G, 14D) eine hydraulische Federungskammer (20) besitzt, die einerseits mit einem von diesem Zylinder getragenen hydropneumatischen Federungsspeicher (26) und andererseits mit einer beiden Zylindern gemeinsamen Vorrichtung zur Korrektur der Fahrzeughöhe verbunden ist.

4. Vorrichtung nach einem der Ansprüche 1 bis 3, **dadurch gekennzeichnet, dass** die Verbindungsmittel (30) folgendes umfassen:
- einerseits zwei Kreuzleitungen (38, 40), die jeweils mit einem ersten Ende (38A, 40A) versehen sind, das die restliche Leitung (38, 40) mit einer Anti-Querneigungskammer (24) eines ersten Zylinders über das diesem ersten Zylinder (14G, 14D) zugeordnete, in die gekreuzte Konfiguration geschaltete Schaltventil (34G, 34D) verbindet, sowie mit einem zweiten Ende (38B, 40B), das ständig mit der entgegengesetzten Anti-Querneigungskammer (22) des zweiten Zylinders (14D, 14G) verbunden ist, so dass die gekreuzten Kreise (C1, C2) gebildet werden, und
- andererseits zwei Zweigleitungen (42G, 42D), die die mit einem gemeinsamen Zylinder (14G, 14D) verbundenen Enden (38B, 40A, 38A, 40B) der beiden Kreuzleitungen (38, 40) über das diesem Zylinder (14G, 14D) zugeordnete, in die ungekreuzte Konfiguration geschaltete Schaltventil (34G, 34D) miteinander verbinden, so dass die ungekreuzten Kreise (DG, DD) gebildet werden,
- wobei die Enden zur Verbindung der beiden Kreuzleitungen (38, 40) mit den Anti-Querneigungskammern (22, 24) den gekreuzten Kreisen (C1, C2) und den ungekreuzten Kreisen (DG, DD) gemeinsam sind.

5. Vorrichtung nach Anspruch 4, **dadurch gekennzeichnet, dass** sie zwei hydropneumatische Anti-Querneigungsspeicher (54, 56) aufweist, die mit den beiden Kreuzleitungen (38, 40) auf Abschnitten von diesen verbunden sind, die sie nicht mit den ungekreuzten Kreisen (DG, DD) gemeinsam haben.

6. Vorrichtung nach einem der Ansprüche 1 bis 5, **dadurch gekennzeichnet, dass** die Steuermittel (36) ein Magnetventil (44) umfassen, das mit den beiden Schaltventilen (34G, 34D) hydraulisch verbunden ist.

7. Vorrichtung nach den Ansprüche 5 und 6 zusammen, **dadurch gekennzeichnet, dass** die beiden hydropneumatischen Anti-Querneigungsspeicher (54, 56) und das Steuermagnetventil (44) von einem gemeinsamen, von den Zylindern (14G, 14D) getrennten Halter (58) getragen werden.

8. Vorrichtung nach Anspruch 6 oder 7, **dadurch gekennzeichnet, dass** jedes Schaltventil (34G, 34D) einen Verteiler mit zwei Stelllungen, die der gekreuzten bzw. der ungekreuzten Konfiguration entsprechen, und mit drei Öffnungen (01 bis 03) aufweist, die mit einer Anti-Querneigungskammer (22, 24) des das Schaltventil tragenden Zylinders (14G, 14D) bzw. mit den entgegengesetzten Anti-Querneigungskammern (24, 22) desselben Zylinders (14G, 14D) und des anderen Zylinders (14D, 14G) verbunden sind.

9. Vorrichtung nach Anspruch 8, **dadurch gekennzeichnet, dass** die beiden Stellungen des Verteilers jedes Schaltventils (34G, 34D) durch Bewegung eines Schiebers des Verteilers zwischen einer der gekreuzten Konfiguration der Verbindungsmittel entsprechenden Ruhestellung und einer der ungekreuzten Konfiguration der Verbindungsmittel entsprechenden aktiven Stellung definiert sind, wobei ein erstes Ende des Schiebers ständig dem hydraulischen Rückholdruck einer der Kammern (20 bis 24) des das Schaltventil tragenden Zylinders (14G, 14D) ausgesetzt ist, so dass der Schieber in die Ruhestellung beaufschlagt wird, und das zweite Ende des Schiebers, wenn das Magnetventil (44) aktiviert ist, dem hydraulischen Steuerdruck des Magnetventils (44) ausgesetzt ist, so dass der Schieber entgegen dem hydraulischen Rückholdruck in die aktive Stellung beaufschlagt wird.

## Claims

1. Hydropneumatic suspension device for a pair of wheels (12G, 12D) of a wheel-axle unit of a motor vehicle, of the type comprising
a pair of jacks (14G, 14D) each connected to a corresponding wheel (12G, 12D) and each comprising a body (16) in which a piston (18) slides, and
anti-tilt means comprising:
- for each jack (14G, 14D), two opposing hydraulic anti-tilt chambers (22, 24), which are upper and lower chambers, respectively, and which are separated by the piston (18),
- means (30) for the hydraulic connection of the anti-tilt chambers (22, 24) to one another, and
- means (32) for switching the connecting means (30) between a first configuration, known as the uncrossed configuration, in which the connecting means (30) define two uncrossed hydraulic circuits (DG, DD) each connecting the two anti-tilt chambers (22, 24) of the same jack, and a second configuration, known as the crossed configuration, in which the connecting means (30) define two crossed hydraulic circuit (C1, C2) each connecting an anti-tilt chamber (22, 24) of one jack (14G, 14D) to the opposite anti-tilt chamber (24, 22) of the other jack (14D, 14G),
**characterised in that** the switching means (32) comprise two switching valves (34G, 34D) which are each associated with a jack (14G, 14D) and which are controlled simultaneously by common means (36) for changing the configuration of the connecting means (30), those two switching valves (34G, 34D) defining, when the connecting means (30) are in their uncrossed configuration, uncrossed circuits (DG, DD) which are separated mechanically from one another and which are shorter than the crossed circuits (C1, C2).

2. Device according to claim 1, **characterised in that** the switching valve (34G, 34D) and the uncrossed circuit (DG, DD) associated with a jack (14G, 14D) are arranged in the body (16) of that jack.

3. Device according to claim 1 or 2, **characterised in that** each jack (14G, 14D) comprises a hydraulic suspension chamber (20) connected, on the one hand, to a hydropneumatic suspension accumulator (26) carried by that jack and, on the other hand, to a device for correcting the height of the vehicle, which device is common to the two jacks.

4. Device according to any one of claims 1 to 3, **characterised in that** the connecting means (30) comprise,
on the one hand, two crossing ducts (38, 40) each provided with a first end (38A, 40A) connecting the remaindor of the duct (38, 40) to an anti-tilt chamber (24) of a first jack by means of the switching valve (34G, 34D) - associated with that first jack (14G, 14D) - switched into the crossed configuration, and with a second end (38B, 40B) connected permanently to the opposite anti-tilt chamber (22) of the second jack (14D, 14G), in such a manner as to define the crossed circuits (C1, C2), and,
on the other hand, two branch ducts (42G, 42D) connecting to one another the ends (38B, 40A, 38A, 40B) of the two crossing ducts (38, 40), which ends are connected to the same jack (14G, 14D) by means of the switching valve (34G, 34D) - associated with that jack (14G, 14D) - switched into the uncrossed configuration, in such a manner as to define the uncrossed circuits (DG, DD),
the ends for connection to the anti-tilt chambers (22, 24) of the two crossing ducts (38, 40) being common to the crossed circuits (C1, C2) and the uncrossed circuits (DG, DD).

5. Device according to claim 4, **characterised in that** it comprises two anti-tilt hydropneumatic accumulators (54, 56) connected, respectively, to the two crossing ducts (38, 40) at portions of the latter not common to the uncrossed circuits (DG, DD).

6. Device according to any one of claims 1 to 5, **characterised in that** the control means (36) comprise a solenoid valve (44) connected hydraulically to the two switching valves (34G, 34D).

7. Device according to claims 5 and 6 taken together, **characterised in that** the two anti-tilt hydropneumatic accumulators (54, 56) and the solenoid control valve (44) are carried by a common support (58) separate from the jacks (14G, 14D).

8. Device according to claim 6 or 7, **characterised in that** each switching valve (34G, 34D) comprises a distributor having two positions - corresponding to the crossed and uncrossed configurations - and having three openings (01 to 03) communicating, respectively, with one anti-tilt chamber (22, 24) of the jack (14G, 14D) carrying the switching valve and with the opposite anti-tilt chambers (24, 22) of that same jack (14G, 14D) and of the other jack (14D, 14G).

9. Device according to claim 8, **characterised in that** the two positions of the distributor of each switching valve (34G, 34D) are defined by displacement of a slide of the distributor between a resting position, corresponding to the crossed configuration of the connecting means, and an active position, corresponding to the uncrossed configuration of the connecting means, a first end of the slide being subjected permanently to the hydraulic return pressure of one of the chambers (20 to 24) of the jack (14G, 14D) carrying the switching valve, in order to urge the slide into the resting position, the second end of the slide being subjected, when the solenoid valve (44) is activated, to the hydraulic control pressure of the solenoid valve (44) in order to urge the slide into the active position, against the hydraulic return pressure.
